(19) Europäisches Patentamt / European Patent Office / Office européen des brevets

(11) **EP 2 458 232 B1**

(12) **FASCICULE DE BREVET EUROPEEN**

(45) Date de publication et mention
de la délivrance du brevet:
**26.12.2012 Bulletin 2012/52**

(51) Int Cl.:
***F16B 23/00*** *(2006.01)*

(21) Numéro de dépôt: **11183813.2**

(22) Date de dépôt: **04.10.2011**

(54) **Organe de fixation à empreinte d'extrémité dans une partie terminale filetée, élément mâle, outil de manoeuvre et calibre comprenant un tel élément mâle**

Befestigungsorgan mit Endhohlraum in einem Endteil mit Gewinde, Stiftelement, Betätigungswerkzeug und Kaliber, das ein solches Stiftelement enthält

Attachment member with an end cavity in a threaded terminal portion, male element, operation tool and gauge including such a male element

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2010 FR 1059674**

(43) Date de publication de la demande:
**30.05.2012 Bulletin 2012/22**

(73) Titulaire: **Lisi Aerospace**
**75012 Paris (FR)**

(72) Inventeur: **Gaillard, Arnaud**
**91300 Massy (FR)**

(74) Mandataire: **Schmit, Christian Norbert Marie**
**Schmit-Chretien S.A.S.**
**8 Place du Ponceau**
**95031 Cergy Pontoise Cedex (FR)**

(56) Documents cités:
**DE-A1-102004 022 852    FR-A1- 2 809 781**

EP 2 458 232 B1

**Description**

DOMAINE TECHNIQUE

L'invention concerne un organe de fixation comprenant une partie terminale filetée dont une face d'extrémité présente une empreinte apte à coopérer avec un outil de manoeuvre ou un calibre de contrôle, un élément mâle présentant une forme en relief apte à engager une empreinte d'un organe de fixation, ainsi qu'un outil de manoeuvre et un calibre de contrôle comprenant un tel élément mâle .

Un organe de fixation de ce type est prévu pour être associé à un écrou, pour réaliser l'assemblage d'au moins deux pièces à partir d'un seul côté de l'assemblage.

L'invention trouve une application privilégiée dans l'industrie aéronautique. Elle peut toutefois être utilisée dans tout autre domaine industriel, notamment lorsque l'accès à l'un des côtés des pièces à assembler est difficile.

ETAT DE LA TECHNIQUE

On connaît du document FR2809781 A1 (qui divulgue le préambule de la revendication 1) un organe de fixation comprenant une tête et une partie terminale filetée dont une face d'extrémité présente une empreinte de forme multilobée, prévue pour coopérer avec un outil de forme correspondante. La forme multilobée permet d'appliquer un couple de serrage important et évite également la formation de fissures dans le métal composant l'organe de fixation, notamment lorsque le filetage est réalisé par laminage après que l'empreinte a été obtenue par déformation plastique du métal. Selon un mode de réalisation, les lobes de l'empreinte sont formés par un arc de cercle extérieur et par deux faces latérales planes, les lobes adjacents étant alors reliés par des arcs de cercles intérieurs tangents aux faces planes. Selon un autre mode de réalisation, les lobes de l'empreinte sont formés par un arc de cercle extérieur avec deux arcs de cercles intérieurs de plus grand rayon de courbure.

Un tel organe de fixation est utilisé de la façon suivante : il est disposé dans une ouverture pratiquée au travers d'au moins deux structures à assembler, sa tête appuyant d'un côté des structures à assembler. Un écrou est disposé de l'autre côté des structures, sur la partie terminale filetée dépassant de l'ouverture. Un outil de manoeuvre, comprenant un embout présentant une forme en relief complémentaire de l'empreinte de l'organe de fixation, engage l'embout dans l'empreinte afin de maintenir l'organe de fixation fixe en rotation par rapport aux structures à assembler. Ce même outil, comprenant par ailleurs des moyens de serrage d'un écrou, visse l'écrou sur la partie terminale filetée maintenue fixe en rotation par l'embout de l'outil, en développant un certain couple de serrage. Ce couple est d'autant plus important que l'écrou est freiné et/ou que la tension augmente dans l'assemblage. Il se développe alors, entre l'empreinte de la partie terminale filetée et l'embout, un couple de réaction qui a tendance à faire pivoter l'embout dans l'empreinte de l'organe de fixation. Grâce aux formes complémentaires multilobées et aux dimensions particulières de l'empreinte et de la forme en relief, aucun dommage n'apparaît dans la région annulaire située autour du bord périphérique de l'empreinte et l'écrou est vissé de manière satisfaisante sur l'organe de fixation.

Bien que cette empreinte apporte une amélioration significative par rapport à des empreintes hexagonales bien connues de l'état de la technique, le couple maximum auquel l'organe de fixation peut être monté dans l'assemblage sans déformation excessive est limité. L'augmentation du couple au-delà de cette limite provoque des déformations notamment dans les embouts d'outil de serrage ou de démontage.

Un objet de l'invention est donc de fournir un organe de fixation fileté qui puisse être monté avec un couple plus important que celui des organes de fixation de l'art antérieur. Un autre objet de l'invention est un élément mâle de forme complémentaire à celle de l'empreinte, qui a une résistance au couple améliorée.

EXPOSE DE L'INVENTION

L'invention a pour objet un organe de fixation présentant une partie terminale filetée dont une face d'extrémité présente une empreinte de forme multilobée, dont la conception lui permet d'éviter l'apparition de fissurations dans la partie terminale filetée, lorsque le filetage est réalisé par laminage après que l'empreinte a été obtenue par forgeage, mandrinage ou usinage. Cette empreinte permet également à l'organe de supporter un couple de réaction plus important sans engager sa tenue en fatigue et en traction, et notamment de la partie terminale filetée.

Conformément à l'invention, ce résultat est obtenu au moyen d'un organe de fixation s'étendant selon un axe de symétrie, comprenant une partie terminale filetée dont une face d'extrémité présente une empreinte. L'empreinte comporte un bord périphérique en forme de ligne courbe continue multilobée, chaque lobe étant défini en section par une série continue de trois arcs de cercle, à savoir un premier arc de cercle convexe présentant un premier rayon autour duquel sont disposés de part et d'autre un deuxième arc de cercle concave de deuxième rayon. Chaque lobe est raccordé au lobe adjacent par un troisième arc de cercle convexe de troisième rayon supérieur au premier rayon.

Des essais effectués par le déposant ont montré que les contraintes développées dans l'extrémité filetée étaient peu étendues et de faible niveau quand un outil est inséré dans l'empreinte et qu'un écrou est vissé sur le filetage extérieur de l'organe de fixation. Le niveau de déformation de cette même extrémité est ainsi faible.

L'invention a également pour objet un élément mâle qui peut être incorporé à un outil de manoeuvre ou à un calibre de contrôle.

Conformément à l'invention, l'élément mâle est apte à s'engager dans une empreinte de forme complémentaire d'un organe de fixation. Il présente une forme en relief comportant un bord périphérique en forme de ligne courbe continue multilobée. Chaque lobe est défini en section par une série continue de trois arcs de cercle, à savoir un premier arc de cercle convexe présentant un premier rayon, autour duquel sont disposés de part et d'autre un deuxième arc de cercle concave de deuxième rayon. Chaque lobe est raccordé au lobe adjacent par un troisième arc de cercle convexe de troisième rayon supérieur au premier rayon.

Des essais effectués par le déposant ont montré que les contraintes développées dans un tel élément mâle monté à l'extrémité d'un outil de manoeuvre et soumis à un couple de réaction, étaient également peu étendues et de faible niveau. Ainsi, la forme extérieure de l'élément mâle est moins sollicitée sous un même couple de réaction engendré par la fixation d'un écrou.

L'invention a également pour objet un outil de manoeuvre comportant un élément mâle selon l'invention.

L'invention a également pour objet un calibre de contrôle comportant un élément mâle selon l'invention.

**Brève description des Dessins**

L'invention et ses avantages seront mieux compris à la lecture de la description qui va suivre, donnée uniquement à titre d'exemple et faite en se référant aux dessins annexés, dans lesquels :

- la figure 1 est une vue en perspective d'un organe de fixation à empreinte multilobée selon un mode de réalisation de l'invention,
- la figure 2 est une vue en bout de l'extrémité filetée d'un organe de fixation à empreinte multilobée selon un mode de réalisation de l'invention,
- la figure 3 est une vue en bout en plan rapproché d'une partie de l'extrémité filetée de l'organe de fixation, présentant une empreinte multilobée selon un mode de réalisation de l'invention,
- la figure 4 est une vue de côté d'un embout selon un mode de réalisation de l'invention, pourvu d'une forme en relief multilobée,
- la figure 5 est une vue en bout d'une extrémité d'un embout selon un mode de réalisation de l'invention pourvu d'une forme en relief multilobée,
- la figure 6 est une représentation schématique des contraintes développées dans un système vu en coupe transversale, ledit système comprenant un embout selon un mode de réalisation de l'invention monté sur un outil de manoeuvre, l'embout étant inséré dans une empreinte selon un mode de réalisation de l'invention, et soumis à un couple de réaction,
- la figure 7 est une représentation schématique des contraintes développées dans un système vu en coupe transversale, ledit système comprenant un embout hexagonal monté sur un outil de manoeuvre, inséré dans une empreinte hexagonale de l'état de l'art, lorsque l'embout est soumis à un couple de réaction,
- la figure 8 est une représentation schématique des contraintes développées dans un système vu en coupe transversale, ledit système comprenant un embout multilobé de l'état de l'art monté sur un outil de manoeuvre, inséré dans une empreinte multilobée de l'état de l'art, lorsque l'embout est soumis à un couple de réaction,
- la figure 9 est une vue en perspective d'un calibre de contrôle d'une empreinte selon un mode de réalisation de l'invention, dont une extrémité est pourvue d'un élément mâle pourvu d'une forme en relief multilobée selon un mode de réalisation de l'invention,
- la figure 10 est une vue en bout d'une extrémité d'un calibre de contrôle, destiné à contrôler une dimension d'une empreinte multilobée selon un mode de réalisation de l'invention,
- la figure 11 est une vue en bout d'une extrémité d'un calibre de contrôle, destiné à contrôler une autre dimension d'une empreinte multilobée selon un mode de réalisation de l'invention.

**Description détaillée de l'invention**

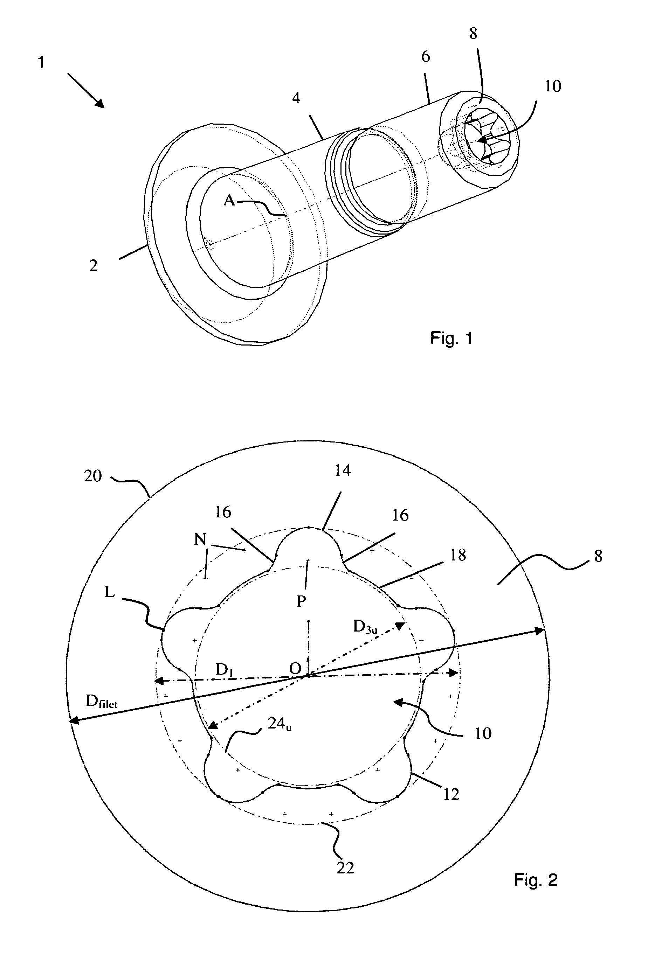

La figure 1 représente un organe de fixation 1 selon un mode de réalisation de l'invention. Cet organe peut être réalisé en métal quelconque, et préférentiellement, pour une application aéronautique, dans un métal à haute limite élastique et de faible déformation plastique tel qu'un alliage de titane.

L'organe de fixation 1 s'étend selon un axe de symétrie A et comprend une tête 2 à une extrémité, destinée à prendre appui sur un côté d'un empilement de structures à assembler, non représentées, ainsi qu'un fût 4 sensiblement lisse, destiné à traverser un perçage réalisé dans l'empilement de structures. Ce fût peut être cylindrique ou conique. L'organe de fixation 1 comprend également une partie terminale filetée 6 destinée à faire saillie de l'autre côté de l'empilement de structures. Sur la figure 1, le filetage n'est pas représenté pour des raisons de clarté. La partie terminale filetée 6 présente une face d'extrémité 8 sur laquelle est réalisée une empreinte 10. L'empreinte 10 s'étend à l'intérieur de la partie filetée 6 sur une certaine distance et présente, dans cet exemple un fond conique.

La figure 2 représente en section l'empreinte 10 sur la face d'extrémité 8. L'empreinte 10 comprend un bord périphérique 12 qui forme une ligne multilobée continue lorsque l'organe de fixation est vu en bout. Le bord périphérique 12 comporte cinq lobes L identiques, répartis régulièrement sur le bord périphérique 12. Avantageusement, le nombre de lobes est d'au moins trois, pour passer suffisamment de couple. Avantageusement, le nombre de lobes est inférieur ou égal à sept. Au-delà, le procédé de fabrication risque de générer une expansion radiale non désirée de la partie terminale filetée 6, selon le diamètre du filetage.

Préférentiellement, les lobes sont disposés de manière à ce que deux lobes ne se retrouvent pas diamétralement opposés afin de limiter la déformation radiale de la partie terminale filetée 6. Plus préférentiellement, le nombre de lobes est impair, afin de limiter les fissures lors du laminage des filets.

Chaque lobe L est formé en section par une série continue de trois arcs de cercle, à savoir

- un premier arc de cercle convexe 14 présentant un premier rayon $R_1$,
- deux deuxièmes arcs de cercles concaves 16 de deuxième rayon $R_2$, disposés de part et d'autre du premier arc de cercle convexe 14.

Chaque lobe L est raccordé au lobe adjacent L par un troisième arc de cercle 18 convexe, présentant un troisième rayon $R_3$ supérieur au premier rayon $R_1$.

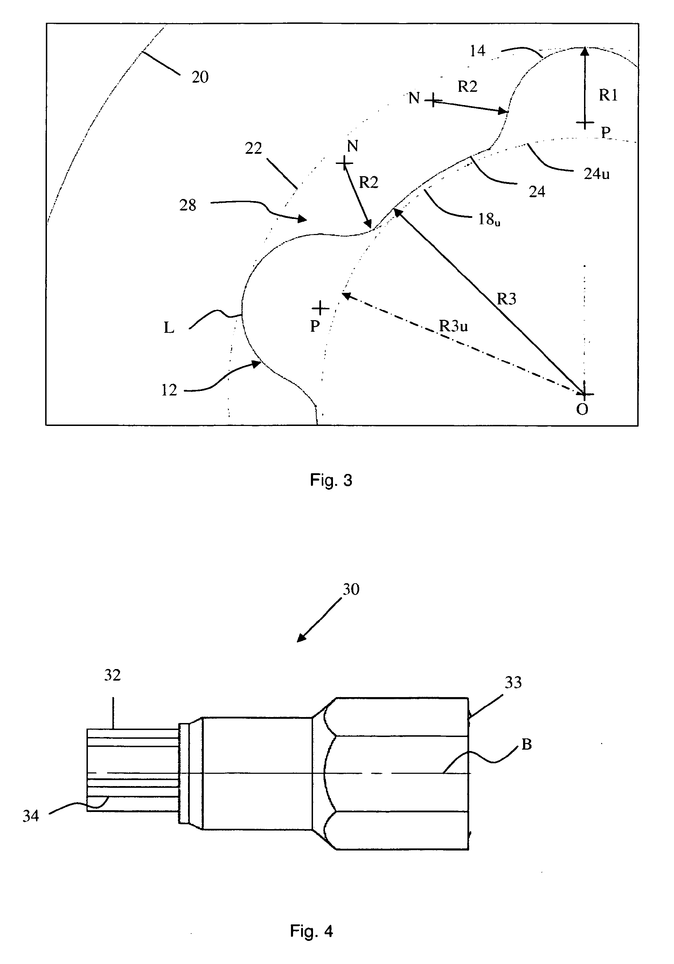

Comme la figure 3 le représente plus précisément, le tracé en trait plein du bord périphérique 12 est celui d'une empreinte 10 réalisée selon un premier mode de réalisation de l'invention. Les rayons $R_1$ et $R_2$ sont tangents en leurs points de raccordement.

Selon un deuxième mode de réalisation, l'empreinte 10 présente un troisième arc de cercle $18_u$ convexe ayant pour troisième rayon $R_{3u}$, indiqué en trait mixte sur les figures 2 et 3, très légèrement inférieur à $R_3$ de quelques microns et donc toujours supérieur au premier rayon $R_1$. Dans ce dernier cas, les deuxièmes arcs de cercle 16 sont légèrement plus longs de manière à être tangents aux extrémités du troisième arc de cercle $18_u$. Les rayons $R_1$ et $R_2$, et $R_2$ et $R_{3u}$ sont tangents en leurs points de raccordement.

La face d'extrémité 8 présente une circonférence extérieure 20 de forme globalement circulaire, de diamètre $D_{filet}$ qui correspond au diamètre de fond de filet du filetage, c'est-à-dire au diamètre de la partie filetée 6 au fond des filets.

Vu en bout, le bord périphérique 12 de l'empreinte 10 est entièrement inscrit dans un cercle 22 de diamètre $D_1$. En d'autres termes, tous les sommets des lobes L sont situés sur le cercle 22.

L'empreinte 10 présente un évidement central cylindrique 24, $24_u$ de troisième rayon $R_3$, $R_{3u}$, ou encore de diamètre $D_3$, $D_{3u}$.

Ainsi, tous les points du bord périphérique 12 sont compris à l'intérieur d'un espace annulaire 28 délimité par les cercles 24, $24_u$, et 22.

Les cercles 20, 22 et 24, $24_u$ ont pour centre le même point O, centre de l'empreinte 10. Ce point O est idéalement situé sur l'axe de symétrie A de l'organe de fixation 1.

Les premiers arcs de cercle convexes 14 de

rayon $R_1$ ont chacun pour centre un point P. Tous les points P sont situés sur un unique cercle de centre O et diamètre tel que ce cercle est compris dans l'espace annulaire 28.

Les deuxièmes arcs de cercle concaves 16 ont chacun pour centre un point N. Tous les points N sont situés sur un unique cercle de centre O et de diamètre tel que ce cercle est compris dans l'espace annulaire 28.

L'empreinte 10 peut être réalisée de plusieurs manières différentes.

Une première méthode est le brochage ou mandrinage, qui consiste à :

- en premier lieu percer l'extrémité filetée 6 à un diamètre $D_3$ à l'aide d'un foret,
- en deuxième lieu, brocher ou mandriner la forme multilobée à l'aide d'un poinçon possédant une forme en relief multilobée apte à créer les lobes L en creux.

Cette méthode de fabrication est simple et rapide mais exige la mise au point de poinçons adaptés pour chacun des diamètres.

Une deuxième méthode est l'usinage. Elle consiste à usiner l'empreinte 10 avec une machine-outil programmée qui ôte la matière de manière à obtenir une empreinte multilobée dont l'évidement central 24, $24_u$ a un diamètre égal à deux fois le troisième rayon $R_3$, $R_{3u}$. Cette méthode de fabrication est moins rapide que la précédente mais est plus flexible, la même machine-outil permettant de réaliser plusieurs tailles d'empreintes.

Une troisième méthode est la forge. Elle consiste à frapper cette extrémité avec un poinçon de matriçage pour créer la forme multilobée en une seule étape.

Selon la méthode de fabrication de l'empreinte 10 retenue, le filetage 6 peut-être réalisé soit avant l'étape de formation de l'empreinte 10, soit après.

Dans tous les cas, il existe un risque de gonflement de l'extrémité si le cercle 22 d'inscription de l'empreinte 10 n'est pas dimensionné pour éviter cet effet.

Selon un mode de réalisation de l'invention, le diamètre $D_1$ du cercle 22 d'inscription de l'empreinte 10 est défini comme étant égal au rapport du diamètre de fond de filet $D_{filet}$ sur un coefficient $\gamma$ compris entre environ 1,32 et environ 1,72. Le terme environ signifie ici et dans le reste de la description qu'une marge de quelques pourcents est acceptable.

$$D_1 = D_{filet} / \gamma$$

Ce coefficient garantit que quelque soit la méthode de fabrication retenue, le diamètre $D_{filet}$ de l'extrémité filetée 6 n'augmentera pas. Ceci assure ainsi que le diamètre $D_{filet}$ reste dans les tolérances imposées pour l'organe de fixation 1.

Le diamètre $D_3$, $D_{3u}$ de l'évidement central 24,

$24_u$ est défini comme étant une fraction de $D_1$, selon la formule :

$$D_3 = \delta \times D_1,$$

Ou

$$D_{3u} = \delta \times D_1,$$

$\delta$ étant un coefficient compris entre environ 0,63 et environ 0,88.

Ce coefficient assure que la surface de contact entre les parois intérieures de l'empreinte 10 et les parois extérieures de l'outil qui sera inséré sera suffisante pour transmettre le couple nécessaire. Plus ce coefficient est petit, plus la surface de contact est grande. Du calcul de $D_3$, $D_{3u}$ est déduit le rayon $R_3$, $R_{3u}$ du troisième arc convexe 18, $18_u$.

Le premier rayon $R_1$ est défini en fonction du diamètre moyen de l'empreinte 10, c'est-à-dire en fonction de la demi-somme du diamètre $D_1$ et du diamètre $D_3$, $D_{3u}$.

Il est égal à :

$$R_1 = \tfrac{1}{2} \times (D_1 + D_3) \times \lambda,$$

$\lambda$ étant un coefficient compris entre environ 0,06 et environ 0,26.

Ce coefficient $\lambda$ permet d'obtenir un lobe L de surface relativement proportionnelle à la surface de l'empreinte. Il assure que le lobe n'est pas trop petit, ce qui induirait des contraintes trop élevées dans la zone périphérique du lobe, ni trop grand, ce qui induirait des risques de déformation lorsqu'un embout d'un outil de manoeuvre est inséré dans l'empreinte 10.

Le deuxième rayon $R_2$ est défini comme étant une fraction du premier rayon $R_1$. Typiquement,

$$R_2 = K \times R_1,$$

K étant un coefficient compris entre environ 0,66 et environ 1,06.

Ce coefficient K lie les rayons $R_1$ et $R_2$ afin d'assurer une surface de contact optimale entre l'empreinte 10 et l'embout d'un outil de manoeuvre.

Grâce à cette géométrie particulière, l'empreinte 10 présente un évidement central cylindrique 24, $24_u$ dont le diamètre $D_3$, $D_{3u}$ est augmenté par rapport au diamètre de l'évidement central des empreintes multilobées de l'état de la technique. Cette caractéristique permet de passer plus de couple de réaction dans le système lorsqu'un outil est inséré dans l'empreinte 10 et maintient l'organe de fixation 1 fixe en rotation pendant une opération de serrage d'un écrou sur la partie terminale filetée 6.

Les deuxièmes arcs de cercle concaves 16 assurent une transition sans angle aigu entre les premiers arcs de cercle 14 et les troisièmes arcs de cercle 18, 18u. Leur forme concave crée également un point de pression sur l'outil, améliorant la retenue de l'outil dans les lobes L.

Les plages des coefficients y, $\delta$ et K tiennent compte du nombre possible de lobes de l'empreinte 10 et du diamètre de l'organe de fixation 1. Le respect de ces valeurs permet de développer une surface des parois intérieures des lobes suffisante pour maintenir l'embout de l'outil à l'intérieur de l'empreinte sans que ce dernier ne glisse sous l'effet de la force de réaction. La surface est maximisée pour permettre le passage d'un couple également maximisé. Les risques de déformation de l'empreinte sont également minimisés.

L'invention concerne également un élément mâle qui présente une forme en relief apte à s'engager dans une empreinte 10 conforme à l'invention, telle que précédemment décrite. Un tel élément mâle peut constituer une extrémité d'un embout monté sur un nez d'un outil de manoeuvre motorisé ou manuel, ou constituer une extrémité d'un outil de manoeuvre manuel tel qu'une clé.

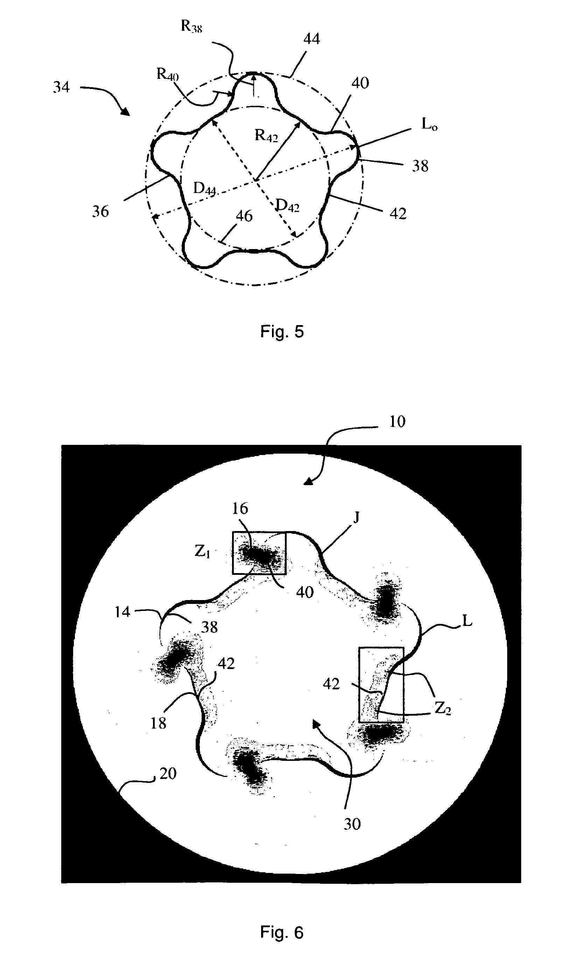

La figure 4 représente un embout 30 d'un outil de manoeuvre, s'étendant selon un axe de symétrie B et comprenant à une extrémité 32 un élément mâle selon un mode de réalisation de l'invention. L'autre extrémité 33 de l'embout est adaptée pour être montée dans l'outil. L'extrémité 32 est un élément mâle 34 présentant une forme en relief, de bord périphérique 36 dont la section, comme représenté en figure 5, est une ligne courbe continue multilobée. Selon un mode de réalisation préféré de l'invention, le bord périphérique 36 comporte cinq lobes $L_o$ identiques, répartis régulièrement sur le bord périphérique 36. En variante, le nombre de lobes est d'au moins trois et d'au plus sept lobes, pour s'adapter à la forme de l'empreinte 10.

Comme l'élément mâle 34 est complémentaire de l'empreinte 10, chaque lobe $L_o$ est formé en section par une série continue de trois arcs de cercle, à savoir

- un premier arc de cercle convexe 38 présentant un premier rayon $R_{38}$,
- deux deuxièmes arcs de cercles concaves 40 de deuxième rayon $R_{40}$, disposés de part et d'autre du premier arc de cercle convexe 38.

Chaque lobe $L_o$ est raccordé au lobe adjacent $L_o$ par un troisième arc de cercle 42 convexe, présentant un troisième rayon $R_{42}$ supérieur au premier rayon $R_{31}$.

Vu en bout, le bord périphérique 36 est entièrement inscrit dans un cercle 44 de diamètre $D_{44}$.

Grâce à cette géométrie particulière, l'extrémité 32 de l'embout 30 présente notamment une section centrale cylindrique 46 dont le diamètre $D_{42}$ - égal à deux

fois le troisième rayon $R_{42}$ - est augmenté par rapport au diamètre de la section centrale des outils de l'état de la technique. Cette caractéristique permet de passer plus de couple de réaction lorsque l'embout 30 est inséré dans l'empreinte 10 et maintient l'organe de fixation 1 fixe en rotation pendant une opération de serrage d'un écrou sur la partie terminale filetée 6, pour un même diamètre de fût d'un organe de fixation de l'état de la technique.

L'élément mâle 34 est préférentiellement configuré de sorte que, lorsque l'embout 30 est inséré dans l'empreinte en relief 10, il existe un jeu J -visible sur la figure 6- convenable entre les parois extérieures de l'élément mâle 34 et les parois intérieures de l'empreinte 10.

Le jeu J est choisi de manière à ce que l'embout puisse être inséré et retiré facilement de l'empreinte 10, même en présence de matière additionnelle comme du mastic d'étanchéité ou de la peinture.

Le diamètre $D_{44}$ du cercle d'inscription 44 est défini en fonction du diamètre $D_1$ de l'empreinte 10 dans laquelle l'embout 30 est destiné à s'insérer, en prenant en compte les tolérances de fabrication et le jeu J nécessaires.

Le diamètre $D_{42}$ de la section cylindrique centrale 46 est calculé en fonction de ce diamètre $D_{44}$, avec la relation :

$$D_{42} = \delta \times D_{44},$$

$\delta$ étant le même coefficient que celui utilisé pour l'empreinte 10, compris entre environ 0,63 et environ 0,88. Le troisième rayon $R_{42}$ est déduit directement en divisant par deux le diamètre $D_{42}$ de la section cylindrique centrale 46.

Le premier rayon $R_{38}$ est défini en fonction du diamètre moyen de l'extrémité 32, c'est-à-dire en fonction de la demi-somme du diamètre $D_{44}$ du cercle d'inscription 44 et du diamètre $D_{42}$ de la section centrale cylindrique 46.

Il est égal à :

$$R_{38} = \tfrac{1}{2} \times (D_{42} + D_{44}) \times \lambda,$$

λ étant le même coefficient que celui utilisé pour l'empreinte 10, compris entre environ 0,06 et environ 0,26.

Le deuxième rayon $R_{40}$ est défini comme étant une fraction du premier rayon $R_{38}$. Typiquement :

$$R_{40} = K \times R_{38},$$

K étant le même coefficient que celui utilisé pour l'empreinte 10, compris entre environ 0,66 et environ 1,06.

La figure 6 montre les contraintes simulées par éléments finis, développées dans un système comprenant un embout 30 porté par ou intégré dans un outil de manoeuvre, dont l'extrémité 32 selon un mode de réalisation de l'invention est insérée dans une empreinte 10 selon un mode de réalisation de l'invention, de diamètre demi pouce ou 12,70 mm, et soumis à un couple de réaction de 2,66 N.m.

Les zones de contact sont limitées aux deuxièmes arcs de cercle 16 de l'empreinte 10 et 40 de l'extrémité 32, d'un seul côté de chaque lobe L selon le sens de rotation de l'embout en réaction au serrage d'un écrou sur la partie terminale filetée 6.

Dans une de ces zones, identifiée sur la figure par la zone rectangulaire $Z_1$, on voit clairement que les contraintes sont peu étendues, que ce soit dans la partie terminale filetée 6 comme dans l'extrémité 32. Elles n'atteignent pas, notamment, le bord périphérique de la partie terminale filetée.

Les contraintes sont quasi nulles dans les premiers arcs de cercle 14 et troisièmes arcs de cercle 18 de l'empreinte 10, et faibles dans les premiers arcs de cercle 38 et les troisièmes arcs de cercle 42 de l'extrémité 32. Il apparaît deux zones $Z_2$ de contrainte très localisées et de très faible amplitude dans les troisièmes arcs de cercle 42 de l'extrémité 32.

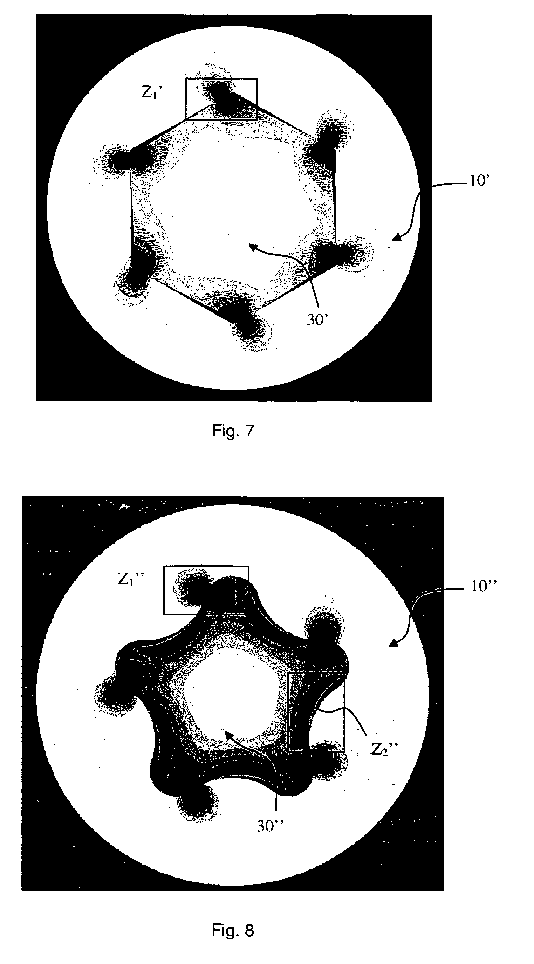

La figure 7 représente les contraintes calculées par élément finis générées dans une empreinte hexagonale 10' six pans de l'état de la technique et dans un embout hexagonal 30' inséré dans l'empreinte 10' et soumis à un couple de torsion. L'échelle de contraintes est la même que celle de la figure 6. Pour un même diamètre de filetage et à iso-couple, les contraintes dans l'empreinte 10' et l'embout 30' identifié par la zone $Z_1$' sont nettement plus importantes et plus étendues que celles générées dans une empreinte multilobée 10 et dans un embout 30 selon un mode de réalisation de l'invention.

La figure 8 représente les contraintes calculées par élément finis générées dans une empreinte multilobée 10" de l'état de la technique et dans un embout 30" multilobé inséré dans l'empreinte 10" et soumis à un couple de torsion. L'échelle de contraintes est la même que celle des figures 6 et 7. Pour un même diamètre de filetage et à iso-couple, les contraintes dans l'empreinte 10" et l'embout 30" identifiées par la zone $Z_1$" sont plus importantes et plus étendues que celles générées dans une empreinte multilobée 10 et dans un embout 30 selon un mode de réalisation de l'invention.

De plus, il apparaît clairement des contraintes dans toutes les zones de raccordement $Z_2$" en forme d'arc de cercle convexe entre les lobes. Leur niveau et leur étendue sont nettement plus élevés que ceux des contraintes développées dans une extrémité 34 selon l'invention.

Cela signifie qu'un embout 30 présentant un élément mâle 34 selon l'invention, inséré dans une empreinte 10 et soumis à un couple se déformera peu : la casse d'embout 30 surviendra moins souvent. On pourra ainsi serrer plus d'organes de fixation 1 avec le même embout 30. En effet, la forme concave des troisièmes arcs de cercle 18, 42 respectivement de l'empreinte 10 et de embout 30 réduisent les sollicitations et les déformations permanentes sur le diamètre extérieur de l'embout 30.

Grâce à cette forme particulière, l'empreinte 10 selon l'invention permet de transmettre, à même diamètre, même couple et mêmes matériaux, jusqu'à 20% de couple en plus par rapport à une empreinte multilobée de l'état de la technique, et jusqu'à 60% de couple en plus par rapport à une empreinte hexagonale de l'état de la technique, avant de se déformer plastiquement.

L'invention concerne également un calibre de contrôle 50 de la conformité d'une empreinte 10 selon un mode de réalisation de l'invention, telle que précédemment décrite, comprenant une extrémité en forme d'élément mâle tel que précédemment décrit.

En effet, après fabrication de l'empreinte selon l'une des méthodes décrites, il est courant lors du contrôle qualité de l'organe de fixation 1 de vérifier que l'empreinte 10 est conforme au plan de fabrication.

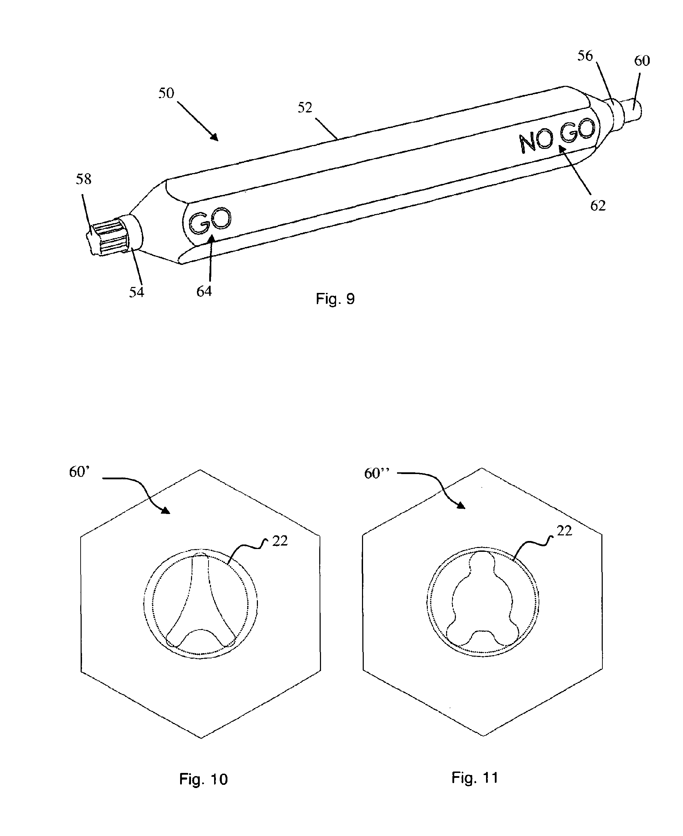

A cet effet, un calibre de contrôle 50 tel que représenté en figure 9 comporte un corps 52 préhensible, de forme globalement allongée, et présente deux extrémités opposées 54 et 56. Une première extrémité 54 comporte un premier élément mâle 58 identique à l'élément mâle 34 décrit précédemment. En variante non représenté, le corps du calibre peut être de forme comportant plusieurs extrémités, comme une croix ou une étoile.

Chaque lobe de la forme en relief du premier élément mâle 58 est ainsi formé en section par une série continue de trois arcs de cercle, à savoir

- un premier arc de cercle convexe présentant un premier rayon,
- deux deuxièmes arcs de cercles concaves de deuxième rayon, disposés de part et d'autre du premier arc de cercle convexe.

Chaque lobe est raccordé au lobe adjacent par un troisième arc de cercle convexe, présentant un troisième rayon supérieur au premier rayon.

La forme en relief est préférentiellement configurée de sorte que, lorsque l'élément mâle 58 est inséré dans l'empreinte 10, il existe un jeu convenable entre les parois extérieures de la forme en relief et les parois intérieures de l'empreinte 10. Ce jeu est cependant plus faible que le jeu J retenu pour l'élément mâle 34 utilisé pour l'embout 30.

Les dimensions du premier élément mâle 58 - rayons des lobes, diamètres de la section centrale cylindrique - sont définies de la même manière que celles de l'élément mâle 34, au jeu près ; les règles de dimensionnement ne seront donc pas rappelées ci-après.

Ce premier élément mâle 58 permet de vérifier que le bord périphérique 12 de l'empreinte 10 ne présente aucun rayon plus petit que ceux définis par le plan de fabrication. Si l'élément mâle 58 ne rentre pas dans l'empreinte 10, alors l'organe de fixation 1 doit être rejeté pour non-conformité.

Si le premier élément mâle 58 s'insère dans l'empreinte 10, l'opérateur doit vérifier que certaines dimensions ne sont pas trop grandes. A cet effet, le calibre 50 comporte à une deuxième extrémité 56 un deuxième élément mâle 60 de section par exemple circulaire présentant un rayon supérieur au troisième rayon $R_3$ de l'empreinte 10. Ce deuxième élément mâle 60 permet de vérifier que le diamètre de l'évidement central cylindrique 24, $24_u$ n'est pas trop grand par rapport au diamètre $D_{42}$ de la section cylindrique centrale 42 d'un embout 30 qui sera utilisé pour maintenir l'organe de fixation 1 fixe lors du serrage de l'écrou.

Alternativement, comme représenté en figure 10, l'extrémité 56 peut être munie d'un troisième élément mâle 60' comportant trois lobes, chaque sommet de lobe étant formé en section par un arc de cercle convexe présentant un rayon inférieur au premier rayon $R_1$ de l'empreinte 10 à contrôler. Les centres de ces rayons sont disposés sur un cercle tel que le troisième élément mâle 60' est inscrit dans un cercle de plus grand diamètre que le diamètre $D_1$ du cercle d'inscription 22 de l'empreinte 10. Cet élément 60' permet de vérifier que le diamètre $D_1$ de l'empreinte 10 n'est pas trop grand.

Alternativement, l'extrémité 56 peut être munie d'un quatrième élément mâle 60" comportant trois lobes, comme représenté en figure 11. Chaque sommet de lobe est formé en section par un arc de cercle convexe présentant un rayon légèrement supérieur au premier rayon $R_1$ de l'empreinte 10 à contrôler. Les centres de ces rayons sont disposés sur un cercle tel que le troisième élément mâle 60" est inscrit dans un cercle de diamètre inférieur ou égal au diamètre $D_1$ du cercle d'inscription 22 de l'empreinte 10. Cet élément 60" permet de vérifier que le premier rayon $R_1$ de l'empreinte 10 n'est pas trop grand par rapport au premier rayon d'un embout 30 qui sera utilisé pour maintenir l'organe de fixation 1 fixe lors du serrage de l'écrou.

L'extrémité 56 comportant un troisième ou un quatrième élément mâle 60', 60" est insérée puis retirée plusieurs fois dans l'empreinte 10, par rotations successives du calibre, pour contrôler tous les lobes. Si un des éléments mâles 60', 60" rentre dans l'empreinte 10, alors l'organe de fixation 1 doit être rejeté pour non-conformité.

En effet, si l'une des dimensions des éléments mâles 60, 60' ou 60" est supérieure à la dimension maximale admissible, alors il existera un jeu trop important entre l'extrémité 32 d'un embout 30 et l'empreinte 10 et les surfaces de contact ne seront plus dimensionnées pour transmettre le couple maximal autorisé. Cela peut conduire à la détérioration des lobes L de l'empreinte 10 et/ou de l'embout 30.

Le corps 52 du calibre de contrôle comporte au moins une indication 62 de non-conformité de l'empreinte 10 à contrôler disposée près de la deuxième extrémité 56 portant un des deuxième, troisième ou quatrième élément mâle 60, 60' ou 60". Dans l'exemple illustré, il s'agit de la mention visuelle « NO GO » qui indique à l'opérateur que si l'élément mâle 60, 60' ou 60" rentre dans l'empreinte 10, alors cet organe de fixation 1 doit être rejeté pour non-conformité.

Le calibre de contrôle peut comporter aussi une indication 64 de conformité de l'empreinte à contrôler disposé sur le corps 52 du calibre 50, près de la première extrémité 54. Dans l'exemple illustré, il s'agit de la mention visuelle « GO ». Evidemment, toute autre indication de conformité ou de non-conformité peut être une indication visuelle rédigée dans la langue de l'opérateur ou peut être constituée de tout autre signe, couleur ou marquage en relief, comme du braille, approprié.

**Revendications**

1. Organe de fixation (1) s'étendant selon un axe de symétrie (A) comprenant une partie terminale filetée (6), dont une face d'extrémité (8) présente une empreinte (10), ladite empreinte (10) comportant un bord périphérique (12) en forme de ligne courbe continue multilobée, **caractérisée en ce que** chaque lobe (L) est défini en section par une série continue de trois arcs de cercle, à savoir un premier arc de cercle convexe (14) présentant un premier rayon ($R_1$), autour duquel sont disposés de part et d'autre un deuxième arc de cercle concave (16) de deuxième rayon ($R_2$), et **en ce que** chaque lobe (L) est raccordé au lobe adjacent par un troisième arc de cercle convexe (18, $18_u$) de troisième rayon ($R_3$, $R_{3u}$) supérieur au premier rayon ($R_1$).

2. Organe de fixation (1) selon la revendication 1, **caractérisé en ce que** le bord périphérique (12) de l'empreinte est inscrit dans un cercle (22) centré sur l'axe de symétrie (A), et **en ce que** le rapport entre le diamètre de fond de filet ($D_{filet}$) de la partie terminale filetée (6) et le diamètre ($D_1$) du cercle d'inscription (22) est compris entre environ 1,32 et environ 1,72.

3. Organe de fixation (1) selon la revendication 2, **caractérisé en ce que** l'empreinte comporte un évidement cylindrique central (24, $24_u$) dont le diamètre ($D_3$, $D_{3u}$) est égal à deux fois le troisième rayon ($R_3$, $R_{3u}$), et **en ce que** le rapport entre le diamètre ($D_3$, $D_{3u}$) de l'évidement cylindrique central et le diamètre ($D_1$) du cercle d'inscription (22) est compris entre environ 0,63 et environ 0,88.

4. Organe de fixation (1) selon la revendication 3, **caractérisé en ce que** le premier rayon ($R_1$) est définit par la relation :

$$R_1 = \tfrac{1}{2} \times (D_1 + D_{3,\,3u}) \times \lambda,$$

$D_1$ étant le diamètre du cercle d'inscription (22),
$D_{3,\,3u}$ étant le diamètre de l'évidement central cylindrique (24, $24_u$),
$\lambda$ étant un coefficient compris entre environ 0,06 et environ 0,26.

5. Organe de fixation (1) selon la revendication 4, **caractérisé en ce que** le rapport entre le deuxième rayon ($R_2$) et le premier rayon ($R_1$) est compris entre environ 0,66 et environ 1,06.

6. Organe de fixation (1) selon l'une des revendications 1 à 5, **caractérisé en ce que** le bord périphérique (12) de l'empreinte (10) comprend de 3 à 7 lobes.

7. Elément mâle (34, 58) apte à s'engager dans une empreinte de forme complémentaire d'un organe de fixation (1), présentant une forme en relief comportant un bord périphérique (36) en forme de ligne courbe continue multilobée, **caractérisé en ce que** chaque lobe ($L_o$) est défini en section par une série continue de trois arcs de cercle, à savoir un premier arc de cercle convexe (38) présentant un premier rayon ($R_{38}$), autour duquel sont disposés de part et d'autre un deuxième arc de cercle concave (40) de deuxième rayon ($R_{40}$), et **en ce que** chaque lobe ($L_o$) est raccordé au lobe adjacent par un troisième arc de cercle convexe (42) de troisième rayon ($R_{42}$) supérieur au premier rayon ($R_{31}$).

8. Elément mâle (34, 58) selon la revendication 7, **caractérisé en ce qu'**il comporte une section centrale cylindrique (46) présentant un diamètre ($D_{42}$) égal à deux fois le troisième rayon ($R_{42}$), **en ce qu'**il est inscrit dans un cercle (44) tangent aux lobes ($L_o$) et présentant un diamètre prédéfini ($D_{44}$) tel que le rapport entre le diamètre ($D_{42}$) de la section centrale cylindrique et le diamètre prédéfini ($D_{44}$) du cercle d'inscription (44) est compris entre environ 0,63 et environ 0,88.

9. Elément mâle (34, 58) selon la revendication 8, **caractérisé en ce que** le premier rayon ($R_{38}$) est définit par la relation :

$$R_{38} = \tfrac{1}{2} \times (D_{42} + D_{44}) \times \lambda,$$

$D_{44}$ étant le diamètre prédéfini du cercle d'inscription (44),
$D_{42}$ étant le diamètre de l'évidement central cylindrique (46),
$\lambda$ étant un coefficient compris entre environ 0,06 et environ 0,26.

**10.** Elément mâle (34, 58) selon la revendication 9, **caractérisé en ce que** le rapport entre le deuxième rayon ($R_{40}$) et le premier rayon ($R_{38}$) est compris entre environ 0,66 et environ 1,06.

**11.** Elément mâle (34, 58) selon l'une des revendications 7 à 10, **caractérisé en ce que** le bord périphérique de la forme en relief comprend de 3 à 7 lobes.

**12.** Outil de manoeuvre comportant un embout (30) apte à s'insérer dans une empreinte (10) d'un organe de fixation (1), **caractérisé en ce que** l'embout (30) présente une extrémité (32) comportant un élément mâle (34) selon l'une des revendications 7 à 11.

**13.** Calibre de contrôle (50) apte à contrôler au moins une dimension d'une empreinte (10) d'un organe de fixation (1) selon l'une des revendications 1 à 6, **caractérisé en ce qu'**il comporte un corps préhensible présentant au moins deux extrémités (54, 56), et **en ce qu'**une première extrémité (54) est munie d'un élément mâle (58) selon l'une des revendications 7 à 11.

**14.** Calibre de contrôle (50) selon la revendication 13, **caractérisé en ce qu'**il comporte à une autre extrémité (56) un deuxième élément mâle de section circulaire (60) choisi de manière à présenter un rayon supérieur au troisième rayon ($R_3$) de l'empreinte (10).

**15.** Calibre de contrôle (50) selon la revendication 13, **caractérisé en ce qu'**il comporte à une autre extrémité (56) un troisième élément mâle multilobé (60'), chaque sommet de lobe étant formé en section par un arc de cercle convexe présentant un rayon supérieur au premier rayon ($R_1$) de l'empreinte (10) à contrôler, le troisième élément mâle (60') étant inscrit dans un cercle de plus grand diamètre que le cercle d'inscription (22) de l'empreinte (10).

**16.** Calibre de contrôle (50) selon la revendication 13, **caractérisé en ce qu'**il comporte à une autre extrémité (56) un quatrième élément mâle multilobé (60"), chaque sommet de lobe étant formé en section par un arc de cercle convexe présentant un rayon inférieur au premier rayon ($R_1$) de l'empreinte (10) à contrôler, le quatrième élément mâle (60") étant inscrit dans un cercle de même diamètre que le cercle d'inscription (22) de l'empreinte (10).

**17.** Calibre de contrôle (50) selon l'une des revendications 13 à 16, **caractérisé en ce qu'**il comporte au moins une indication (64, 62) de conformité ou de non-conformité de l'empreinte (10) à contrôler, disposée près de la première (54) ou d'une autre extrémité (56).

**Claims**

**1.** A fixing member (1) extending along an axis of symmetry (A) comprising a threaded end (6), one end face (8) of which contains a recess (10), said recess (10) comprising a peripheral edge (12) in the form of a multilobed continuous curved line, **characterised in that** the cross-section of each lobe (L) is defined by a continuous series of three arcs of a circle, i.e. a first convex arc of a circle (14) with a first radius ($R_1$), on either side of which a second concave arc of a circle (16) with a second radius ($R_2$) are positioned, and **in that** each lobe (L) is connected to the adjacent lobe via a third convex arc of a circle (18, $18_u$) with a third radius ($R3$, $R3_u$) larger than the first radius ($R_1$).

**2.** A fixing member (1) according to claim 1, **characterised in that** the peripheral edge (12) of the recess is inscribed in a circle (22) centred around the axis of symmetry (A) and **in that** the ratio between the diameter of the thread base ($D_{filet}$) of the threaded end (6) and the diameter ($D_1$) of the circle of inscription (22) is between approximately 1.32 and approximately 1.72.

**3.** A fixing member (1) according to claim 2, **characterised in that** the recess comprises a central cylindrical hollow (24, $24_u$), the diameter ($D_3$, $D_{3u}$) of which is equal to twice the third radius ($R_3$, $R_{3u}$) and **in that** the ratio between the diameter ($D_3$, $D_{3u}$) of the central cylindrical hollow and the diameter ($D_1$) of the circle of inscription (22) is between approximately 0.63 and approximately 0.88.

**4.** A fixing member (1) according to claim 3, **characterised in that** the first radius ($R_1$) is defined by the formula:

$$R_1 = \tfrac{1}{2} \times (D_1 + D_{3,\,3u}) \times \lambda,$$

$D_1$ being the diameter of the circle of inscription (22).
$D_{3,\,3u}$ being the diameter of the central cylindrical hollow (24, $24_u$),
$\lambda$ being a coefficient between approximately 0.06 and approximately 0.26.

**5.** A fixing member (1) according to claim 4, **characterised in that** the ratio between the second radius ($R_2$) and the first radius ($R_1$) is between approximately 0.66 and approximately 1.06.

**6.** A fixing member (1) according to one of claims 1 to 5, **characterised in that** the peripheral edge (12) of the recess (10) comprises 3 to 7 lobes.

7. A male element (34, 58) capable of being inserted into a recess, complementary in shape, of a fixing member (1), with a raised shape comprising a peripheral edge (36) in the form of a multilobed continuous curved line, **characterised in that** the cross-section of each lobe ($L_0$) is defined by a continuous series of three arcs of a circle, i.e. a first convex arc of a circle (38) with a first radius ($R_{38}$), on either side of which a second concave arc of a circle (40) with a second radius ($R_{40}$) are positioned, and **in that** each lobe ($L_0$) is connected to the adjacent lobe via a third convex arc of a circle (42) with a third radius ($R_{42}$,) larger than the first radius ($R_{31}$).

8. A male element (34, 58) according to claim 7, **characterised in that** it comprises a central cylindrical section (46) with a diameter ($D_{42}$) equal to twice the third radius ($R_{42}$), and **in that** it is inscribed in a circle (44) tangent to the lobes ($L_0$) and with a predefined diameter ($D_{44}$) so that the ratio between the diameter ($D_{42}$) of the central cylindrical section and the predefined diameter ($D_{44}$) of the circle of inscription (44) is between approximately 0.63 and approximately 0.88.

9. A male element (34, 58) according to claim 8, **characterised in that** the first radius ($R_{38}$) is defined by the formula:

$$R_{38} = \tfrac{1}{2} \times (D_{42} + D_{44}) \times \lambda,$$

$D_{44}$ being the predefined diameter of the circle of inscription (44),
$D_{42}$ being the diameter of the central cylindrical hollow (46),
$\lambda$ being a coefficient of between approximately 0.06 and approximately 0.26.

10. A male element (34, 58) according to claim 9, **characterised in that** the ratio between the second radius ($R_{40}$) and the first radius ($R_{38}$) is between approximately 0.66 and approximately 1.06.

11. A male element (34, 58) according to one of claims 7 to 10, **characterised in that** the peripheral edge of the raised form comprises 3 to 7 lobes.

12. A handling tool comprising a tip (30) capable of being inserted into a recess (10) of a fixing member (1), **characterised in that** the tip (30) has an end (32) comprising a male element (34) according to one of claims 7 to 11.

13. A testing gauge (50) capable of testing at least one dimension of a recess (10) of a fixing member (1) according to one of claims 1 to 6, **characterised in that** it comprises a grippable body with at least two ends (54, 56), and **in that** a first end (54) is fitted with a male element (58) according to one of claims 7 to 11.

14. A testing gauge (50) according to claim 13, **characterised in that** it comprises a second male element at another end (56), with a circular cross-section (60) chosen so as to have a radius larger than the third radius ($R_3$) of the recess (10).

15. A testing gauge (50) according to claim 13, **characterised in that** it comprises a third multilobed male element (60') at another end (56), the cross-section of each lobe peak being formed by a convex arc of a circle with a radius larger than the first radius ($R_1$) of the recess (10) being checked, the third male element (60') being inscribed in a circle with a larger diameter than the circle of inscription (22) of the recess (10).

16. A testing gauge (50) according to claim 13, **characterised in that** it comprises a fourth multilobed male element (60") at another end (56), the cross-section of each lobe peak being formed by a convex arc of a circle with a radius smaller than the first radius ($R_1$) of the recess (10) being checked, the fourth male element (60") being inscribed in a circle with the same diameter as the circle of inscription (22) of the recess (10).

17. A testing gauge (50) according to one of claims 13 to 16, **characterised in that** it comprises at least one conformity or non-conformity indicator (64, 62) for the recess (10) being checked, positioned near to the first (54) or another end (56).

**Patentansprüche**

1. Befestigungsorgan (1), das sich entlang einer Symmetrieachse (A) erstreckt, umfassend einen Endabschnitt mit Gewinde (6), dessen eine Abschlussfläche (8) eine Vertiefung (10) aufweist, und die besagte Vertiefung (10) einen umlaufenden Rand (12) in Form einer durchgehenden mehrflächigen Kurvenlinie umfasst, **dadurch gekennzeichnet, dass** der Querschnitt jedes Nockens (L) durch eine durchgehende Reihe von drei Kreisbögen beschrieben wird, nämlich durch einen ersten konvexen Kreisbogen (14) mit einem ersten Radius ($R_1$), um den beiderseits jeweils ein zweiter konkaver Kreisbogen (16) mit einem zweiten Radius ($R_2$) angeordnet ist, und dadurch, dass jeder Nocken (L) durch einen dritten konvexen Kreisbogen (18, 18$_u$) mit einem dritten Ra-

dius ($R_3$, $R_{3u}$) mit dem benachbarten Nocken verbunden ist, der größer als der erste Radius ($R_1$) ist.

2. Befestigungsorgan (1) nach Anspruch 1, **dadurch gekennzeichnet, dass** der umlaufende Rand (12) der Vertiefung in einen mittigen Kreis (22) auf der Symmetrieachse (A) eingesetzt ist, und dadurch, dass das Verhältnis zwischen dem Durchmesser des Gewindefußes ($D_{filet}$) des Endabschnitts mit Gewinde (6) und dem Durchmesser ($D_1$) des eingesetzten Kreises (22) zwischen etwa 1,32 und etwa 1,72 liegt.

3. Befestigungsorgan (1) nach Anspruch 2, **dadurch gekennzeichnet, dass** die Vertiefung eine mittige zylindrische Ausnehmung (24, $24_u$) umfasst, deren Durchmesser ($D_3$, $D_{3u}$) gleich zwei Mal dem dritten Radius ($R_3$, $R_{3u}$) ist, und dadurch, dass das Verhältnis zwischen dem Durchmesser ($D_3$, $D_{3u}$) der mittigen zylindrischen Ausnehmung und dem Durchmesser ($D_1$) des eingesetzten Kreises (22) zwischen etwa 0,63 und 0,88 liegt.

4. Befestigungsorgan (1) nach Anspruch 3, **dadurch gekennzeichnet, dass** der erste Radius ($R_1$) durch die folgende Gleichung beschrieben wird:

$$R_1 = \tfrac{1}{2} \times (D_1 + D_{3,\,3u}) \times \lambda$$

$D_1$ ist dabei der Durchmesser des eingesetzten Kreises (22)
$D_{3,\,3u}$ ist dabei der Durchmesser der mittigen zylindrischen Ausnehmung (24, $24_u$),
$\lambda$ ist dabei ein Koeffizient zwischen etwa 0,06 und etwa 0,26.

5. Befestigungsorgan (1) nach Anspruch 4, **dadurch gekennzeichnet, dass** das Verhältnis zwischen dem zweiten Radius ($R_2$) und dem ersten Radius ($R_1$) zwischen etwa 0,66 und etwa 1,06 liegt.

6. Befestigungsorgan (1) nach einem der Ansprüche 1 bis 5, **dadurch gekennzeichnet, dass** der umlaufende Rand (12) der Vertiefung (10) zwischen 3 und 7 Nocken umfasst.

7. Steckelement (34, 58), das in eine Vertiefung in einer ergänzenden Form eines Befestigungsorgans (1) eingeführt werden kann, das eine Reliefform umfassend einen umlaufenden Rand (36) in Form einer durchgehenden mehrflächigen Kurvenlinie aufweist, **dadurch gekennzeichnet, dass** der Querschnitt jedes Nockens ($L_o$) durch eine durchgehende Reihe von drei Kreisbögen beschrieben wird, nämlich durch einen ersten konvexen Kreisbogen (38) mit einem ersten Radius ($R_{38}$), um den beiderseits jeweils ein zweiter konkaver Kreisbogen (40) mit einem zweiten Radius ($R_{40}$) angeordnet ist, und dadurch, dass jeder Nocken ($L_o$) durch einen dritten konvexen Kreisbogen (42) mit einem dritten Radius ($R_{42}$) mit dem benachbarten Nocken verbunden ist, der größer als der erste Radius ($R_{31}$) ist.

8. Steckelement (34, 58) nach Anspruch 7, **dadurch gekennzeichnet, dass** es einen mittigen zylindrischen Abschnitt (46) umfasst, der einen Durchmesser ($D_{42}$) gleich zwei Mal dem dritten Radius ($R_{42}$) aufweist, und dadurch, dass er in einen Kreis (44) eingeschrieben ist, der an den Nocken ($L_o$) anliegt, und einen vorbestimmten Durchmesser ($D_{44}$) aufweist, sodass das Verhältnis zwischen dem Durchmesser ($D_{42}$) des mittigen zylindrischen Abschnitts und dem vorbestimmten Durchmesser ($D_{44}$) des eingeschriebenen Kreises (44) zwischen etwa 0,63 und etwa 0,88 liegt.

9. Steckelement (34, 58) nach Anspruch 8, **dadurch gekennzeichnet, dass** der erste Radius ($R_{38}$) durch die folgende Gleichung beschrieben wird:

$$R_{38} = \tfrac{1}{2} \times (D_{42} + D_{44}) \times \lambda$$

$D_{44}$ ist dabei der Durchmesser des eingesetzten Kreises (44)
$D_{42}$ ist dabei der Durchmesser der mittigen zylindrischen Ausnehmung (46),
$\lambda$ ist dabei ein Koeffizient zwischen etwa 0,06 und etwa 0,26.

10. Steckelement (34, 58) nach Anspruch 9, **dadurch gekennzeichnet, dass** das Verhältnis zwischen dem zweiten Radius ($R_{40}$) und dem ersten Radius ($R_{38}$) zwischen etwa 0,66 und etwa 1,06 liegt.

11. Steckelement (34, 58) nach einem der Ansprüche 7 bis 10, **dadurch gekennzeichnet, dass** der umlaufende Rand der Reliefform zwischen 3 und 7 Nocken umfasst.

12. Bearbeitungswerkzeug umfassend ein Endstück (30), das in eine Vertiefung (10) eines Befestigungsorgans (1) eingeführt werden kann, **dadurch gekennzeichnet, dass** das Endstück (30) ein Ende (32) aufweist, das ein Steckelement (34) nach einem der Ansprüche 7 bis 11 umfasst.

13. Prüflehre (50), die zumindest eine Abmessung einer Vertiefung (10) eines Befestigungsorgans (1) nach einem der Ansprüche 1 bis 6 prüfen kann, **dadurch gekennzeichnet, dass** sie einen greifbaren Korpus umfasst, der zumindest zwei Enden (54, 56) aufweist, und dadurch, dass ein erstes Ende (54) mit einem Steckelement (58) nach einem der Ansprüche 7 bis 11 versehen ist.

**14.** Prüflehre (50) nach Anspruch 13, **dadurch gekennzeichnet, dass** sie an einem anderen Ende (56) ein zweites Steckelement mit kreisrundem Querschnitt (60) umfasst, das so ausgewählt wird, dass es einen Radius aufweist, der größer ist, als der dritte Radius ($R_3$) der Vertiefung (10).

**15.** Prüflehre (50) nach Anspruch 13, **dadurch gekennzeichnet, dass** sie an einem anderen Ende (56) ein drittes mehrflächiges Steckelement (60') umfasst, wobei jeder Querschnitt des Nockenscheitels durch einen konvexen Kreisbogen gebildet wird, der einen Radius aufweist, der größer ist, als der erste Radius ($R_1$) der zu prüfenden Vertiefung (10), wobei das dritte Steckelement (60') in einen Kreis mit größerem Durchmesser eingeschrieben ist, als der eingesetzte Kreis (22) der Vertiefung (10).

**16.** Prüflehre (50) nach Anspruch 13, **dadurch gekennzeichnet, dass** sie an einem anderen Ende (56) ein viertes mehrflächiges Steckelement (60") umfasst, wobei jeder Querschnitt des Nockenscheitels durch einen konvexen Kreisbogen gebildet wird, der einen Radius aufweist, der kleiner ist, als der erste Radius ($R_1$) der zu prüfenden Vertiefung (10), wobei das vierte Steckelement (60") in einen Kreis mit einem Durchmesser eingeschrieben ist, der gleich dem eingesetzten Kreis (22) der Vertiefung (10) ist.

**17.** Prüflehre (50) nach einem der Ansprüche 13 bis 16, **dadurch gekennzeichnet, dass** sie zumindest eine Anzeige (64, 62) über die Konformität oder die Nicht-Konformität der zu prüfenden Vertiefung (10) umfasst, die nahe dem ersten (54) oder einem anderen Ende (56) angeordnet ist.

Fig. 1

Fig. 2

Fig. 3

Fig. 4

Fig. 5

Fig. 6

Fig. 7

Fig. 8

Fig. 9

Fig. 10                              Fig. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2809781 A1